# EUROPÄISCHE PATENTSCHRIFT

(11) **EP 0 424 617 B1**
(45) Veröffentlichungstag und Bekanntmachung des Hinweises auf die Patenterteilung: **17.01.1996**
(21) Anmeldenummer: 90115199.3
(22) Anmeldetag: 08.08.1990
(51) Int. Cl.: E04F 17/02, F23J 13/04

(54) **Aus mehreren Rohrabschnitten aufgebautes Rauchrohr eines Kamins**
Smoke tube for a chimney made of several sections
Conduit de fumée pour cheminée composée de plusieurs segments

(30) Priorität: 21.10.1989 DE 3935103; 16.03.1990 DE 4008464
(43) Veröffentlichungstag der Anmeldung: 02.05.1991
(73) Patentinhaber: ERLUS BAUSTOFFWERKE, D-84088 Neufahrn (DE)
(72) Erfinder: Dendl, Peter, Dr. rer. nat., D-8400 Regensburg (DE); Ingenpass, Heinz, Dipl.-Ing., D-8301 Neufahrn (DE); Voit, Josef, D-8303 Rottenburg a.d. Laaber (DE)
(74) Vertreter: LOUIS, PÖHLAU, LOHRENTZ & SEGETH

(56) Entgegenhaltungen:
- EP-A- 0 225 967
- DE-U- 8 234 108
- DE-U- 8 907 041
- GB-A- 1 584 399
- US-A- 4 502 370

## Beschreibung

Die Erfindung betrifft ein Rauchrohr eines Kamins, das aus mehreren Rohrabschnitten aufgebaut ist, welche an ihren Stoßstellen abdichtend ineinander gefügt sind.

Im Kaminbau, sowohl bei der Neuerstellung als auch bei der Sanierung von Altkaminen, geht die Tendenz zunehmend dahin, die Rauchrohre der mehrschaligen Kamine aus möglichst dünnwandigen Rohrabschnitten zu erstellen, da mit abnehmender Wandstärke eine schnellere Aufheizung der Rohrabschnitte im Brennintervall erfolgt und damit die Neigung zu einer vorzeitigen Kondensatbildung aus den Rauchgasen an der Rauchrohrinnenwand herabgesetzt wird. Aufgrund der geringen Wandstärke ist jedoch die herkömmliche Verbindung der einzelnen Rohrabschnitte miteinander durch eine Nut/Feder-Fügung nicht möglich, so daß die einzelnen Rohrabschnitte stirnseitig aneinandergesetzt und mittels Kitt oder Mörtel miteinander verbunden werden müssen. Dies gilt selbst für solche Rohrabschnitte, die nicht durch Strangpressen, sondern durch isostatisches Pressen hergestellt sind. Es ist deshalb schon bekannt, zwischen den einzelnen Rohrabschnitten eines Kamin-Rauchrohres eine Zentriermanschette anzuordnen, die die exakte Ausrichtung der stirnseitig aufeinandergesetzten Rohrabschnitte bewirkt, so daß zuvor auf die obenliegende Stirnseite aufgebrachter Kitt flächig exakt verteilt wird und die gewünschte Verbindung herstellt (DE-PS 35 04 446). Bekannt ist weiterhin auch eine für dünnwandige Rohrabschnitte aus Sonderkeramik bestimmte Kittmanschette, die mit einem in seinen Querabmessungen kleineren Teil den jeweils unteren Rohrabschnitt eng umgreift und einen in den Querabmessungen größeren oberen Teil aufweist, der für die Konzentrierung des Kitts im Bereich der Stoßfuge sorgt (DE-PS 33 17 661). Derartige verlorene Zentrier- bzw. Kittmanschetten sind jedoch vergleichsweise teuer und erhöhen den Aufwand bei der Kaminerstellung.

Weiterhin ist auch eine Einrichtung zum Verbinden keramischer Rohre bekannt, die hoher Betriebstemperatur ausgesetzt werden können, insbesondere für Rekuperatoren (EP-A 225 967). Diese Einrichtung sieht vor, daß eine an einem Rohrende ausgebildete Muffe ein in diese eingefügtes Ende eines benachbarten Rohres umgreift, wodurch ein Zwischenraum gebildet ist, in den eine keramische Fasermatte eingelegt ist. Die keramische Fasermatte enthält ein sich bei Betriebstemperatur aufblähendes Blähmittel, z.B. Blähglimmer. Durch dessen Aufblähen baut die Fasermatte einen Druck auf, der die ineinandergefügten Rohrenden kraftschlüssig zusammenhält und dadurch einen elastischen Klemmsitz schafft. Diese Verbindungseinrichtung setzt jedoch eine den Preis erhöhende Imprägnation der keramischen Fasermatte mit dem Blähmittel voraus und hat vor allem zur Folge, daß der für die Verbindung und Befestigung der Rohre aneinander angestrebte Klemmsitz sich erst nach Inbetriebnahme der Anlage, nämlich bei Erreichen der notwendigen Betriebstemperatur, entwickeln kann. Bei Anwendung dieser bekannten Verbindungseinrichtung für aus Rohrabschnitten aufgebaute Kaminrohre lässt sich daher die geforderte sichere Verbindung vor Inbetriebnahme der Heizungsanlage nicht erzielen und stellt sich möglicherweise in den oberen, relativ kühl bleibenden Kaminabschnitten auch nach der Inbetriebnahme der Heizungsanlage nicht ein.

Weiterhin ist bekannt eine Abdichtung und Befestigung von aus Blech bestehenden Ofenrohren aneinander, die ineinandergefügt sind, wobei Dichtmaterial in Form eines Bandes mittels einer Rohrschelle aus Blech über der Stoßstelle der Ofenrohre angepresst wird (DE-U 82 34 108). Diese Art der Verbindung und Abdichtung von Ofenrohren ist bei dem Aufbau von aus Rohrabschnitten bestehenden Kaminrohren praktisch nicht durchführbar.

Schließlich ist auch der Anschluß einer Abgasführung an das Endglied eines Cliederheizkessels bekannt, bei dem die durch ein Blechrohr gebildete Abgasführung an ihrem Rohrende einen Dichtungsring aus Glasfaserschnur trägt und mit diesem zusammen in eine an dem Endglied vorgesehene Ringnut eingeschoben wird (DE-U 89 07 041).

Aufgabe der Erfindung ist es daher, eine Verbindungsart für dünnwandige Rohrabschnitte eines Kamin-Rauchrohrs vorzuschlagen, die bei erheblich geringerem Aufwand und daher niedrigerem Preis eine rauchgasdichte Verbindung der Rohrabschnitte miteinander ermöglicht, wobei die Verbindung sowohl bei der Neuerstellung des Kamins als auch bei der Altkamin-Sanierung einsetzbar ist. Unter "dünnwandig" ist in diesem Zusammenhang eine solche geringe Wandstärke der Rohrabschnitte zu verstehen, die ein Anformen von Nut und Feder nicht mehr gestattet oder aus Gründen des leichten Brechens riskant erscheinen läßt. Eine solche Wandstärke liegt in der Regel unter 15 mm, vorzugsweise unter 10 mm.

Erfindungsgemäß wird diese Aufgabe gelöst durch das Rauchrohr gemäß Patentanspruch 1.

Jeder Rohrabschnitt des erfindungsgemäßen Rauchrohrs weist eine sich erweiternde Muffe an einem Abschnittsende auf, die das Einschieben des anderen, nicht erweiterten Endes des nächstfolgenden bzw. - im fertigen Aufbau nächstoberen - Rohrabschnitts gestattet. Die Herstellung einer unmittelbar angeformten Muffe an einem Rohrabschnitt ist z.B. durch isostatisches Pressen ohne weiteres möglich. Hierbei lassen sich auch Abmessungen mit verhältnismässig geringer Toleranz verwirklichen, weil durch den gleichmässigen Druck eine gleichmässige Wandstärke erzielbar ist und der Schwund auf den Trockenschwund beschränkt bleibt. Aus diesem Grund ist es möglich, das zu erwartende Spiel zwischen der Innenwand der Muffe und dem anderen Ende des jeweiligen Rohrabschnitts in einer gewünschten Grössenordnung, z.B. von 1 bis 3 mm zu halten.

Als Befestigungs- und Abdichtmittel dient erfindungsgemäß ein Keramikfasermaterial (Keramikgewebe oder -vlies), das an sich bekannt und im Handel mit unterschiedlichen Dicken erhältlich ist. Eine Schicht eines derartigen Keramikmaterials ist zwischen der Innenwand der Muffe und der Außenwand des anderen Endes des anschließenden Rohrabschnitts angeordnet, wobei die Dicke des Keramikmaterials so gewählt ist, daß sie das Spiel zwischen der Muffeninnenwand und dem darin einzufügenden Rohrabschnittsende übersteigt. Es hat sich nun gezeigt, daß durch das Eindrücken des Rohrabschnittsendes in die Muffe das an der Innenwand der Muffe anliegende und gegen ein Verrutschen fixierte Keramik material so weitgehend komprimiert wird, daß hierdurch der nächst obere Rohrabschnitt in der Muffe festgeklemmt ist und zugleich eine hinreichende Abdichtung gegen das Austreten von Rauchgas erzielt wird. Dies gilt schon für eine axiale Länge der Innenwand der Muffe von 3 cm. Um das erwähnte Verschieben des Keramikmaterials beim Einfügen des nächst oberen Rohrabschnitts in die Muffe zu verhindern, ist es zweckmäßig, das Keramikmaterial zumindest nahe am oberen Muffenrand an der Innenwand der Muffe zu fixieren. Diese Fixierung kann durch Ankleben des Keramik materials an der Muffeninnenwand erfolgen, jedoch kann an dem Keramikmaterial auch ein verhältnismäßig dicker Randwulst ausgebildet sein, der sich auf einer Schulter oder einem Absatz der Muffeninnenwand abstützt und daran festhält. Eine Fixierung ist auch dadurch möglich, daß das Keramikmaterial über den oberen Muffenrand hinweg auf die Außenseite der Muffe umgeschlagen ist, so daß der beim Einfügen des nächsten Rohrabschnitts auftretende Zug und die damit verbundene Reibung an dem oberen Muffenrand das Keramikmaterial festhält.

Das Keramikmaterial kann grundsätzlich bereits mit dem erforderlichen Durchmesser als geschlossenes Band vorliegen, so daß es - in seiner Umfangslänge exakt auf den Umfang der Muffeninnenwand abgestimmt - in die Muffe nur eingelegt zu werden braucht und auf eine der vorstehend beschriebenen Weisen fixiert werden kann. Die Herstellung von schlauchförmigem Keramikmaterial dieser Art ist jedoch relativ teuer. Aus diesem Grund wird das hier als Befestigungs- und Abdichtmittel zur Anwendung kommende Keramikmaterial vorzugsweise in Streifenform verwendet, wobei die Länge des Streifens annähernd dem Innenumfang der Muffe entspricht.

Ist das Keramikmaterial ein Gewebe, dann kann die Streifenlänge kleiner als der Innenumfang sein, weil sich das Gewebe durch Zug hinreichend bleibend dehnen lässt, um einen evtl. vorhandenen Spalt zwischen den Streifenenden nach dessen Einlegen in die Muffe zu überbrücken. Keramikmaterial in Form von Vlies oder Papier hingegen ist kaum dehnfähig, lässt sich aber stauchen. In diesem Fall kann die Streifenlänge grösser als der Innenumfang sein. Falls der Streifen aus Keramikmaterial, wie oben erwähnt, über den oberen Muffenrand hinweg nach außen umgefaltet wird, kommt es auf ein unmittelbares Aneinanderliegen der dort vorhandenen Streifenenden nicht an. Um ein glattes und gleichmässiges Anliegen des Keramikmaterials an der Muffeninnenwand bei dieser Ausführungsform zu gewährleisten, ist es aber zweckmässign, denjenigen Teil des streifenförmigen Keramikmaterials, der nach dem Einlegen auf dem oberen Muffenrand und auf der Außenseite der Muffe zu liegen kommt, in seiner Länge größer zu wählen oder zu machen. Dies kann durch entsprechendes Zuschneiden des Streifens erfolgen oder - bei einem rechteckig ausgebildeten Streifen - durch Auswalzen des außen zu liegen kommenden Teils auf eine geringere Dicke und daraus resultierende größere Länge.

Das Keramikmaterialkann von vornherein, d. h. ab Kaminwerk, an den fertigen Rohrabschnitten befestigt sein. Es ist aber auch möglich, das Keramikmaterial in Streifenform an die Baustelle anzuliefern, so daß es erst bei der unmittelbaren Verwendung der Rohrabschnitte in deren Muffen eingefügt wird. In diesem Fall ist vorteilhafterweise derjenige Teil der Streifenbreite, der an der Innenwand der Muffe zu liegen kommt, mit einer Klebeschicht versehen, die für den Transport mit einer leicht abziehbaren Trennfolie gesichert ist.

Verfahrensmäßig ist es von Vorteil, auf die Innenseite des in die Muffe bereits eingesetzten Keramikmaterial und/oder auf das einzuschiebende Ende des nächst oberen Rohrabschnitts ein Gleitmittel aufzubringen. Im einfachsten Fall kann das Keramikmaterial hierzu mit Wasser getränkt werden, jedoch ist auch die Verwendung von anderen herkömmlichen Gleitmitteln, z. B. Vaseline, möglich. Hierbei spielt es keine Rolle, daß diese Gleitmittel in der Regel die während des Kaminbetriebs auftretenden höheren Temperaturen nicht aushalten, sondern verdampfen. Denn sie dienen lediglich zur Erleichterung des Fügevorgangs und haben keine weitere Funktion. Es ist aber sogar möglich, als Gleitmittel den herkömmlichen Kitt einzusetzen, der auch bei den bekannten Kaminrohrabschnitten zur Abdichtung und Verbindung eingesetzt wird. Dieser Kitt ist im Anfangszustand weich verformbar und schmierfähig und benötigt zur völligen Aushärtung eine Zeitdauer von etwa 24 h. Er eignet sich deshalb im Rahmen der Erfindung ebenfalls als Gleitmittel und trägt überdies nach seiner Aushärtung zugleich zur Fixierung und zur Abdichtung der Steckverbindung bei.

Ausführungsbeispiele der Erfindung sind nachfolgend anhand der beiliegenden Zeichnungen erläutert. In den Zeichnungen zeigen:
- Fig. 1: einen schematischen Axialschnitt durch zwei übereinander angeordnete Rohrabschnitte eines Kaminrohrs im Bereich der Verbindungsstelle;
- Fig. 2: eine Draufsicht von oben auf das bei der Verbindung verwendete Keramikmaterial im bereits umgefalteten Zustand;
- Fig. 3: das Keramikmaterial gemäß Fig. 2 in Streifenform in noch flachliegendem Zustand; und
- Fig. 4: eine zu Fig. 1 analoge Darstellung der Verbindung mit einem Keramikmaterial anderer Formgestaltung.

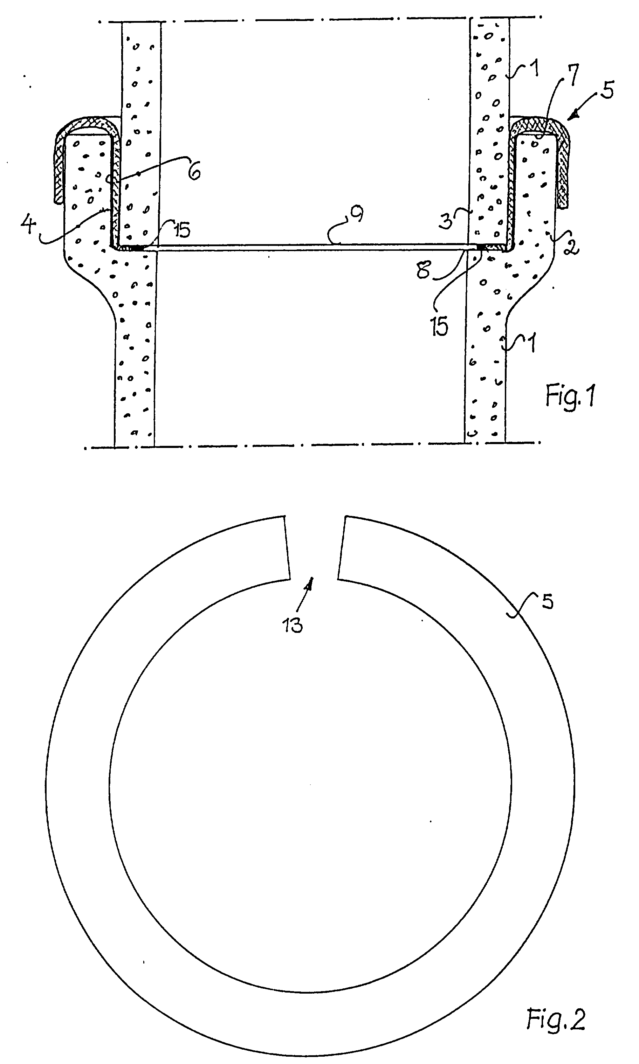

Die Darstellung in Fig. 1 zeigt das - im aufgebauten Kamin - obere Ende eines aus Keramik bestehenden dünnwandigen Kaminrohrabschnitts 1, das zu einer Muffe 2 geformt ist. Die Muffe 2 hat eine solche Weite, daß das untere Ende 3 des nächst oberen Rohrabschnitts 1 darin mit Spiel eingefügt werden kann und nach dem Einfügen die Innenwandungen der übereinander angeordneten Rohrabschnitte 1 im wesentlichen miteinander fluchten. Die Innenwand 4 der Muffe 2 hat eine Höhe von beispielsweise 4 cm und einen Radialabstand von dem konzentrisch zum Rohrabschnitt 1 eingesetzten Ende 3 von beispielsweise 2 mm. Zwischen der Innenwand 4 und dem Ende 3 des oberen Rohrabschnitts befindet sich ein Teil eines Streifens 5 aus einem Keramikgewebe, dessen Dicke im unverformten Zustand größer ist als der genannte Radialabstand der Innenwand 4 von dem Ende 3. Der an der Innenwand 4 anliegende Teil des Keramikgewebe-Streifens 5 ist an dieser durch eine Klebeschicht 6 fixiert. Der Streifen 5 aus Keramikgewebe ist über den oberen Muffenrand 7 hinweg nach außen umgeschlagen und über einen Teil der Außenseite der Muffe 2 nach unten gefaltet. Das zwischen dem Ende 3 und der Innenwand 4 befindliche Keramikgewebe liegt teilweise auch zwischen dem Muffengrund 8 und dem unteren Stirnrand 9 des Endes 3, so daß letzteres sich auf diesem Teil des Keramikgewebes abstützt.

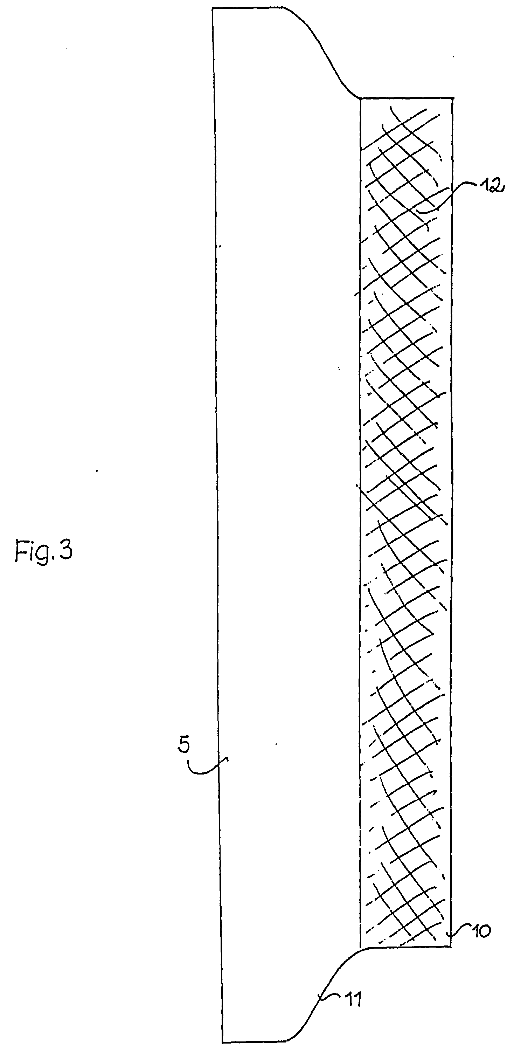

Die Fig. 3 zeigt den Streifen 5 von Keramikgewebe im Ausgangszustand, d. h. vor dem Einbringen in die Muffe 2. Der Streifen 5 weist einen längsverlaufenden Teil 10 auf, dessen Breite gleich wie oder etwas größer als die Höhe der Innenwand 4 der Muffe 2 ist und dessen Länge etwa 10 mm kürzer als der Innenumfang der Innenwand 4 ist. Der an den Streifenteil 10 anschließende linke Teil 11, der in dem in Fig. 1 gezeigten Zustand den über den Muffenrand 7 hinweg nach außen umgefalteten Teil des Keramikgewebestreifens 5 bildet, hat eine von dem Streifenteil 10 ausgehend zunehmende Länge, die im längsten Abschnitt etwa dem Außenumfang der Muffe 2 entspricht. Der Streifen 5 ist in der aus Fig. 3 ersichtlichen Form aus einer Bahn des Keramikgewebes ausgeschnitten oder ausgestanzt; es könnte aber auch ein Streifen von konstanter Länge des Streifenteils 10 verwendet werden, wobei durch nachträgliches Pressen oder Walzen der Streifenteil 11 auf die aus Fig. 3 ersichtliche Form gebracht wird.

Der Streifenteil 10 ist auf einer Seite mit einem Klebemittel 12 beschichtet, das an Keramik bindet und zweckmäßigerweise im Transportzustand des Streifens 5 durch eine nicht gezeigte Schutzfolie abgedeckt ist.

Die Fig. 2 zeigt den Zustand des Streifens 5 nach dessen Formung in einen ringförmigen Zustand und nach dem Umfalten oder Umkippen des längeren Streifenteils 11 nach außen. Die Formgebung entspricht im wesentlichen bereits der Innenform der Muffe 2. Jedoch ist zu diesem Zeitpunkt die Länge des Streifenteils 10 noch nicht ausreichend, um den ganzen Innenumfang der Innenwand 4 abzudecken; es verbleibt ein Spalt 13 zwischen den Enden des Streifens 5. Dieser Spalt 13 kann nun durch Recken des Keramikgewebes überwunden werden, so daß die Enden des Streifens 5 zumindest in dem Teil, der später an der Innenwand 4 zur Anlage kommt, dicht aneinanderstoßen. Danach kann die nicht gezeigte Schutzfolie von der Klebeschicht 12 abgezogen und der Streifen 5 mit dem Streifenteil 10 an der Innenwand 4 festgeklebt werden.

Um das Einschieben des Endes 3 des nächst oberen Rohrabschnitts 1 zu erleichtern, kann nunmehr dieses Ende 3 sowie auch die Innenseite des an der Innenwand 4 befestigten Streifens 5 mit Kitt bestrichen werden. Die Kittschicht dient im noch plastischen Zustand als Gleitmittel, so daß sich das Ende 3 ohne ein Einreißen oder Stauchen des an der Innenwand 4 befestigten Keramikgewebes zum Muffengrund 8 hin vorschieben läßt. Da die Dicke des Keramikgewebes das Spiel zwischen dem Ende 3 und der Innenwand 4 übersteigt, wird während dieses Einschiebevorgangs das Keramikgewebe verdichtet, sowie teilweise nach unten ausgezogen, wodurch der aus Fig. 1 ersichtliche Kragen auf dem Muffengrund 8 erzeugt wird. Zugleich wird auch von dem auf das Keramikgewebe aufgebrachten Kitt ein Teil durch die Stirnkante 9 des Endes 3 nach unten geschabt, so daß sich letztendlich ein dünner Kittwulst 15 am Muffengrund 8 ausbilden kann.

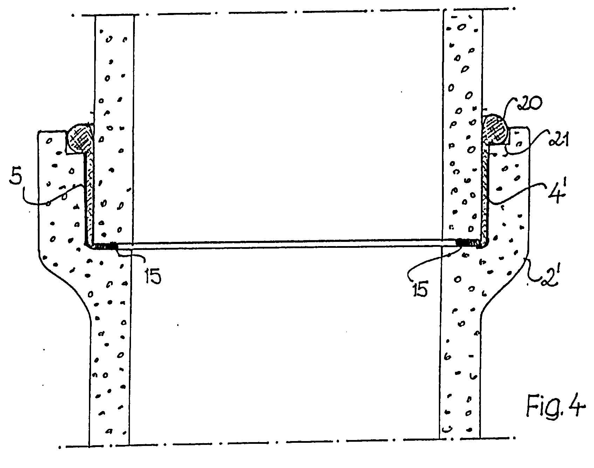

Die Ausführungsform gemäß Fig. 4 unterscheidet sich von der zuvor beschriebenen dadurch, daß das Keramikgewebe nicht in Form eines kragenförmigen Streifens als Befestigungs- und Dichtelement eingebracht ist, sondern im wesentlichen nur die Innenwand 4' der Muffe 2' bedeckt und mit einem an seinem oberen Rand vorgesehenen schnurartigen Wulst 20 in einem Absatz 21 der Innenwand 4' gehalten ist. Bei dieser Ausführungsform genügt die Haltewirkung des Wulstes 20, so daß eine Fixierung des Keramikgewebe-Streifens 5' durch Klebung nicht erforderlich ist.

Anstelle des in dem vorstehend geschilderten Ausführungsbeispiel verwendeten Keramikgewebe-Streifens ist mit dem gleichen Vorteil ein entsprechender Streifen aus einem Keramikfaservlies oder einem Keramikpapier einsetzbar. Derartiges Keramikvlies oder -papier ist ebenfalls im Handel erhältlich. Die jeweils zu verwendende Dicke bemisst sich im Einzelfall nach der zu überbrückenden Durchmesserdifferenz zwischen der Muffeninnenwand und der Außenfläche des nächstoberen Rohrabschnittes, beträgt jedoch vorzugsweise 3 mm. Abweichend von der Darstellung in Fig. 2, die sich insoweit auf die Verwendung eines Keramikgewebes bezieht, sollte aber die Länge des in die Muffe einzusetzenden Keramikpapier-Streifens nicht kleiner als der innenumfang der Muffe sein, da Keramikmaterial dieser Art nur wenig dehnfähig ist und zum Reißen neigt.

Weiterhin ist die in dem Ausführungsbeispiel genannte Muffenlänge von 40 mm keineswegs kritisch. Im Rahmen der Erfindung lassen sich Muffenlängen zwischen 30 und 75 mm verwirklichen.

Der hier verwendete Begriff "Keramikfasermaterial" bezieht sich in der Hauptsache auf das im Handel erhältliche Material, das aus Al₂O₃-Fasern hergestellt ist. Es versteht sich jedoch, daß auf diese spezielle Keramikart der Erfindungsgedanke nicht beschränkt ist und vielmehr zu einem Vlies oder Papier gebundene oder textil zu einem Gewebe verarbeitete warmfeste Glasfasern, Mineralfasern oder Fasern aus einer anderen Keramikart im Rahmen der Erfindung einsetzbar sind.

## Patentansprüche

1. Aus mehreren keramischen Rohrabschnitten (1) aufgebautes Rohr, bei dem jeder Rohrabschnitt an einem Ende zu einer erweiterten Muffe (2,2') geformt ist, in welche das andere Rohrende (3) des jeweils daran anschließenden Rohrabschnitts eingefügt ist und die Außenabmessung des eingefügten Rohrendes (3) auf die Innenabmessung der Muffe (2,2') des benachbarten Rohrabschnitts (1) derart abgestimmt ist, daß zwischen der Außenwand des Rohrendes (3) und der Innenwand (4,4') der Muffe (2,2') im gefügten Zustand ein Zwischenraum besteht, in welchem eine durch ein Keramikfasermaterial gebildete Schicht (5) zum Zweck der Befestigung und Abdichtung der Rohrabschnitte (1) aneinander angeordnet ist,
**dadurch gekennzeichnet,**
daß das Rohr ein Rauchrohr eines Kamins ist, daß die Schicht (5) nur aus Keramikfasermaterial (z.B. Keramikgewebe oder -vlies) gebildet und gegen ein Verrutschen fixiert ist und ihre Dicke im unverdichteten Zustand vor dem Einfügen des Rohrendes (3) in die Muffe (2,2') die Dicke des Zwischenraums übersteigt, und daß die Rohrabschnitte (1) durch den nach dem Einfügen des Rohrendes (3) in die Muffe (2,2') erzielten verdichteten Zustand der Schicht (5) aneinander befestigt und abgedichtet sind.

2. Rauchrohr nach Anspruch 1,
**dadurch gekennzeichnet,**
daß zwischen dem Muffengrund (8) und der Stirnfläche des Endes (3) ein aushärtbarer Kitt (15) eingebracht ist.

3. Rauchrohr nach Anspruch 1 oder 2,
**dadurch gekennzeichnet,**
daß das Keramikmaterial an der Innenwand (4, 4') der Muffe zumindest nahe dem oberen Muffenrand (7) befestigt ist.

4. Rauchrohr nach Anspruch 3,
**dadurch gekennzeichnet,**
daß das Keramikmaterial an der Innenwand (4) der Muffe angeklebt ist.

5. Rauchrohr nach Anspruch 3 oder 4,
**dadurch gekennzeichnet,**
daß das Keramikmaterial in der Nähe des oberen Muffenrandes (7) zu einem Wulst (20) geformt ist und mit dem Wulst in eine in die Innenwand (4') der Muffe eingeformte Nut (21) eingreift.

6. Rauchrohr nach Anspruch 5,
**dadurch gekennzeichnet,**
daß die Nut (21) einen Absatz zwischen dem oberen Muffenrand und der Innenwand (4') der Muffe bildet.

7. Rauchrohr nach Anspruch 3,
**dadurch gekennzeichnet,**
daß das Keramikmaterial zu einem ringförmigen Kragen geformt ist, der den oberen Muffenrand (7) und einen Teil der Muffenaußenfläche übergreift.

8. Verfahren zum Herstellen einer rauchgasdichten Fügung zwischen den Rohrabschnitten (1) eines Rauchrohrs nach Anspruch 1,
**dadurch gekennzeichnet,**
daß in der Muffe (2, 2') ein Keramikmaterial (5) derart angeordnet und befestigt wird, daß es die Innenwand (4, 4') der Muffe weitgehend und lückenlos bedeckt, wobei das Keramikmaterial eine das Spiel zwischen dem Ende (3) des Rohrabschnittes und der Innenwand der Muffe übersteigende Dicke hat, und daß das Ende des Rohrabschnitts in die Muffe unter gleichzeitiger radialer Komprimierung des Keramikmaterials in axialer Ausrichtung eingedrückt wird.

9. Verfahren nach Anspruch 8,
**dadurch gekennzeichnet**,
daß das Keramikmaterial (5) an der Innenwand (4) der Muffe angeklebt wird.

10. Verfahren nach Anspruch 8,
**dadurch gekennzeichnet**,
daß das Keramikmaterial (5) über den oberen Muffenrand (7) hinweg umgelegt und mit der Muffenaußenfläche verbunden wird.

11. Verfahren nach Anspruch 8,
**dadurch gekennzeichnet**,
daß das Keramikmaterial (5) an einem Rand zu einem Wulst (20) geformt ist und mittels des Wulstes zwischen der Innenwand (4') der Muffe und der Außenwand des Rohrendes (3) eingeklemmt wird.

12. Verfahren nach einem der Ansprüche 8 - 11,
**dadurch gekennzeichnet,**
daß auf das in die Muffe einzuschiebende Ende des nächstoberen Rohrabschnitts und/oder auf das die Innenwand der Muffe bedeckende Keramikmaterial ein Gleitmittel aufgebracht wird.

13. Verfahren nach Anspruch 12,
**dadurch gekennzeichnet,**
daß das Keramikmaterial mit Wasser als Gleitmittel getränkt wird.

14. Verfahren nach Anspruch 12,
**dadurch gekennzeichnet,**
daß auf das Keramikmaterial und/oder das einzufügende Ende des Rohrabschnitts ein fettendes Gleitmittel, z.B. Vaseline, aufgetragen wird.

15. Verfahren nach Anspruch 12,
**dadurch gekennzeichnet,**
daß auf das Keramikmaterial Kitt als Gleit- und Dichtmittel aufgetragen wird und daß das Ende des Rohrabschnitts in die Muffe unter gleichzeitiger radialer Komprimierung des Keramikmaterials in axialer Ausrichtung eingedrückt wird, wobei durch die Stirnkante (9) des Endes (3) Kitt (15) auf den Muffengrund (8) geschoben wird.

## Claims

1. A pipe which is made up from a plurality of ceramic pipe sections (1), in which each pipe section is shaped at one end to provide an enlarged socket (2, 2') into which the other pipe end (3) of the respectively adjoining pipe section is inserted and the outside dimension of the inserted pipe end (3) is matched to the inside dimension of the socket (2, 2') of the adjacent pipe section (1) in such a way that in the joined condition there is an intermediate space between the outside wall of the pipe end (3) and the inside wall (4, 4') of the socket (2, 2'), a layer (5) formed by a ceramic fibre material being arranged in said intermediate space for the purposes of fixing and sealing off the pipe sections (1) relative to each other, characterised in that the pipe is a flue pipe of a chimney, that the layer (5) is formed only from ceramic fibre material (for example ceramic cloth or fleece) and is fixed to prevent it from slipping and its thickness in the uncompressed condition prior to insertion of the pipe end (3) into the socket (2, 2') exceeds the thickness of the intermediate space, and that the pipe sections (1) are fixed to each other and sealed off relative to each other by the compressed condition of the layer (5), which is attained after insertion of the pipe end (3) into the socket (2, 2').

2. A flue pipe according to claim 1 characterised in that a hardenable cement (15) is introduced between the socket bottom (8) and the end face of the end (3).

3. A flue pipe according to claim 1 or claim 2 characterised in that the ceramic material is fixed to the inside wall (4, 4') of the socket at least adjacent the upper socket edge (7).

4. A flue pipe according to claim 3 characterised in that the ceramic material is glued to the inside wall (4) of the socket.

5. A flue pipe according to claim 3 or claim 4 characterised in that the ceramic material is shaped to provide a bead (20) in the vicinity of the upper socket edge (7) and engages with the bead into a groove (21) formed in the inside wall (4') of the socket.

6. A flue pipe according to claim 5 characterised in that the groove (21) forms a step between the upper socket edge and the inside wall (4') of the socket.

7. A flue pipe according to claim 3 characterised in that the ceramic material is shaped to provide an annular collar which engages over the upper socket edge (7) and a part of the outside surface of the socket.

8. A method of producing a flue gas-tight join between the pipe sections (1) of a flue pipe according to claim 1 characterised in that a ceramic material (5) is so arranged and fixed in the socket (2, 2') that it covers substantially and without gaps the inside wall (4, 4') of the socket, wherein the ceramic material is of a thickness which exceeds the clearance between the end (3) of the pipe section and the inside wall of the socket, and that the end of the pipe section is pressed into the socket in the axial direction with simultaneous radial compression of the ceramic material.

9. A method according to claim 8 characterised in that the ceramic material (5) is glued to the inside wall (4) of the socket.

10. A method according to claim 8 characterised in that the ceramic material (5) is laid over the upper socket edge (7) and connected to the outside surface of the socket.

11. A method according to claim 8 characterised in that the ceramic material (5) is shaped to provide a bead (20) at one edge and is clamped by means of the bead between the inside wall (4') of the socket and the outside wall of the pipe end (3).

12. A method according to one of claim 8 to 11 characterised in that a lubricant is applied to the end of the next upper pipe section which is to be inserted into the socket and/or to the ceramic material which covers the inside wall of the socket.

13. A method according to claim 12 characterised in that the ceramic material is soaked with water as the lubricant.

14. A method according to claim 12 characterised in that a greasing lubricant, for example Vaseline, is applied to the ceramic material and/or the end of the pipe section, that is to be inserted.

15. A method according to claim 12 characterised in that cement as a lubricant and sealing agent is applied to the ceramic material and that the end of the pipe section is pressed into the socket in the axial direction with simultaneous radial compression of the ceramic material, cement (15) being pushed on to the socket bottom (8) by the end edge (9) of the end (3).

## Revendications

1. Conduit constitué par plusieurs segments (1) de conduit en céramique, dans lequel chaque segment de conduit a, à une extrémité, la forme d'un manchon élargi (2, 2') dans lequel est introduite l'autre extrémité (3) de conduit du segment de conduit respectif qui s'y raccorde, dans lequel la dimension extérieure de l'extrémité (3) de conduit est adaptée à la dimension intérieure du manchon (2, 2') du segment de conduit voisin de telle sorte qu'entre la paroi extérieure de l'extrémité (3) de conduit introduite et la paroi intérieure (4, 4') du manchon (2, 2'), il se forme à l'état monté un espace intermédiaire dans lequel une couche (5) formée par un matériau de fibres céramiques est agencée dans le but de fixer et d'étancher les segments (1) de conduit l'un par rapport à l'autre, caractérisé en ce que le conduit est le conduit de fumée d'une cheminée, en ce que la couche (5) est formée uniquement de matériau de fibres céramiques (par exemple un tissu ou une nappe de céramique) et est fixée pour éviter un décalage, en ce que son épaisseur à l'état non comprimé avant l'introduction de l'extrémité (3) du conduit dans le manchon (2, 2') dépasse l'épaisseur de l'espace intermédiaire, et en ce que les segments (1) de conduit sont fixés et étanchés l'un par rapport à l'autre grâce à l'état comprimé de la couche (5), obtenu après l'introduction de l'extrémité (3) du conduit dans le manchon (2, 2').

2. Conduit de fumée selon la revendication 1, caractérisé en ce qu'un mastic (15) durcissable est mis en place entre le fond (8) du manchon et la face frontale de l'extrémité (3).

3. Conduit de fumée selon l'une ou l'autre des revendications 1 et 2, caractérisé en ce que le matériau de céramique sur la paroi intérieure (4, 4') du manchon est fixé au moins à proximité du bord supérieur (7) du manchon.

4. Conduit de fumée selon la revendication 3, caractérisé en ce que le matériau de céramique est collé sur la paroi intérieure (4) du manchon.

5. Conduit de fumée selon l'une ou l'autre des revendications 3 et 4, caractérisé en ce qu'à proximité du bord supérieur (7) du manchon, le matériau de céramique a la forme d'un bourrelet (20) et s'engage avec le bourrelet dans une gorge (21) ménagée dans la paroi intérieure (4') du manchon.

6. Conduit de fumée selon la revendication 5, caractérisé en ce que la gorge (21) forme un gradin entre le bord supérieur du manchon et la paroi intérieure (4') du manchon.

7. Conduit de fumée selon la- revendication 3, caractérisé en ce que le matériau de céramique a la forme d'un col annulaire qui recouvre le bord supérieur (7) du manchon et une partie de la face extérieure du manchon.

8. Procédé de fabrication d'une jointure étanche aux gaz de fumée entre les segments (1) d'un conduit de fumée selon la revendication 1, caractérisé en ce qu'un matériau de céramique (5) est agencé et fixé de telle manière dans le manchon (2, 2') qu'il couvre dans une large mesure et sans lacune la paroi intérieure (4, 4') du manchon, le matériau de céramique ayant une épaisseur dépassant le jeu entre l'extrémité (3) du segment de conduit et la paroi intérieure du manchon, et en ce que l'extrémité du segment de conduit est enfoncée dans le manchon par compression radiale simultanée du matériau de céramique en direction axiale.

9. Procédé selon la revendication 8, caractérisé en ce que le matériau de céramique (5) est collé sur la paroi intérieure (4) du manchon.

10. Procédé selon la revendication 8, caractérisé en ce que le matériau de céramique (5) est rabattu au-delà du bord supérieur (7) du manchon et est relié à la surface extérieure du manchon.

11. Procédé selon la revendication 8, caractérisé en ce que sur un bord, le matériau de céramique (5) a la forme d'un bourrelet (20) et il est serré au moyen du bourrelet entre la paroi intérieure (4') du manchon et la paroi extérieure de l'extrémité (3) du conduit.

12. Procédé selon l'une quelconque des revendications 8 à 11, caractérisé en ce qu'un lubrifiant est appliqué sur l'extrémité du segment de conduit supérieur suivant à enfiler dans le manchon et/ou sur le matériau de céramique couvrant la paroi intérieure du manchon.

13. Procédé selon la revendication 12, caractérisé en ce que le matériau de céramique est imbibé d'eau en tant que lubrifiant.

14. Procédé selon la revendication 12, caractérisé en ce qu'un lubrifiant gras, par exemple de la vaseline, est appliqué sur le matériau de céramique et/ou sur l'extrémité du segment de conduit à introduire.

15. Procédé selon la revendication 12, caractérisé en ce que du mastic est appliqué comme lubrifiant ou agent d'étanchéité sur le matériau de céramique et en ce que l'extrémité du segment de conduit est enfoncée dans le manchon en comprimant simultanément radialement le matériau de céramique en direction axiale, du mastic (15) étant poussé sur le fond du manchon 8 grâce à l'arête frontale (9) de l'extrémité (3).
